# EUROPÄISCHE PATENTANMELDUNG

(11) **EP 3 663 147 A1**
(43) Veröffentlichungstag der Anmeldung: **10.06.2020**
(21) Anmeldenummer: 19208607.2
(22) Anmeldetag: 12.11.2019
(51) Int. Cl.: B60T 8/26, B60T 8/40, B60T 8/48

(54) **ELEKTROHYDRAULISCHE BREMSANLAGE EINES OFF-HIGHWAY-FAHRZEUGS**

(30) Priorität: 03.12.2018 DE 102018130678
(71) Anmelder: WABCO GmbH, 30453 Hannover (DE)
(72) Erfinder: HAVERKAMP, Michael, 30455 Hannover (DE); SABELHAUS, Dennis, 30163 Hannover (DE); ZIELKE, Frank, 30890 Barsinghausen (DE)
(74) Vertreter: Copi, Joachim

(57) **Zusammenfassung**

Die Erfindung betrifft eine elektrohydraulische Bremsanlage (1) eines Off-Highway-Fahrzeugs, welche folgendes aufweist: einen ersten hydraulischen Bremskreis (14) für eine erste Fahrzeugachse (2), einen zweiten hydraulischen Bremskreis (15) für mindestens eine zweite Fahrzeugachse (3, 4), mindestens eine Radbremse (8a, 8b, 9a, 9b, 10a, 10b) für jeweils ein Fahrzeugrad (5a, 5b, 6a, 6b, 7a, 7b) pro Fahrzeugachse (2, 3, 4), wobei die Radbremse einen mit einem hydraulischen Druckfluid beaufschlagbaren Bremszylinder (11a, 11b, 12a, 12b, 13a, 13b) aufweist, eine elektronische Steuereinheit (26) mit einer Bremskraftverteilungsfunktion, mindestens einen Bremssignalgeber (19), mindestens ein zentrales Bremskraftverteilventil (18, 21) pro Bremskreis (14, 15), mindestens einen Signaleingang der Steuereinheit (26) zur Erfassung eines Bremssignals des Bremssignalgebers (19), sowie mindestens einen Signalausgang der Steuereinheit (26) je Bremskraftverteilventil (18, 21) zu dessen Steuerung, wobei durch die Steuereinheit (26) in Zusammenwirken mit dem zentralen Bremskraftverteilventil (18, 21) und dem Bremssignalgeber (19) dem jeweiligen Bremskreis (14, 15) ein Bremsdruck zur Beaufschlagung der Bremszylinder (11a, 11b, 12a, 12b, 13a, 13b) der zu bremsenden Radbremsen (8a, 8b, 9a, 9b, 10a, 10b) der betreffenden Fahrzeugachsen (2, 3, 4) mit einem hydraulischen Druckfluid zuführbar ist.

## Beschreibung

Die Erfindung betrifft eine elektrohydraulische Bremsanlage eines Off-Highway-Fahrzeugs gemäß Anspruch 1.

In vielen Off-Highway-Anwendungen von Kraftfahrzeugen, also solchen, bei denen Kraftfahrzeuge auf unbefestigten Wegen fahren, werden elektrohydraulische Bremssysteme verwendet. Der Hydraulikdruck für die Radbremsen wird dabei durch ein elektrisches Signal an elektromechanische Radbremsventile geregelt, wobei die Bremsanforderung von dem Fahrer mittels einer Sensorik erfasst und über einen Signalgeber an eine elektronische Steuereinheit übermittelt wird. Der Fahrer beeinflusst die Funktion der Radbremsen somit nur noch indirekt, wodurch eine weitergehende elektronische Regelung der Bremsleistung möglich ist. Insbesondere ermöglicht die elektronische Regelung eine genaue Einstellung der Bremsleistung an jedem Rad, um eine jeweils situationsangepasste effektive Abbremsung des Fahrzeugs zu erreichen.

Bei einer elektronischen Bremskraftverteilung wird beispielsweise der Differenzschlupf zwischen den Vorderrädern und den Hinterrädern beziehungsweise zwischen der Vorderachse und einer oder mehrerer Hinterachsen des Fahrzeugs betrachtet. Eine Bremskraftverteilungsfunktion der elektronischen Steuereinheit regelt dabei den Bremsdruck in den Bremszylindern der Räder der Fahrzeugachsen. Dies erfolgt durch eine Modifizierung von Steuersignalen für eine Ventilanordnung. Beispielsweise kann durch Regeln der Bremskraft zwischen Vorder- und Hinterachse ein Überbremsen der Hinterachse verhindert werden, bevor ein gegebenenfalls vorhandenes Antiblockiersystem eingreifen würde.

Elektrohydraulische Bremsanlagen für Off-Highway-Anwendungen sind in verschiedenen Ausführungen bekannt. Dabei sind hydraulische Leitungen zwischen dem Bremspedal beziehungsweise einem Bremssignalgeber und allen Radbremsen beziehungsweise deren zugehörigen Bremszylindern zwingend vorgeschrieben. Die bekannten elektrohydraulischen Bremsanlagen weisen zur Regelung der Bremsleistung üblicherweise für jede Radbremse der zu bremsenden Fahrzeugräder ein ansteuerbares Proportionalventil auf, dessen hydraulischer Volumenstrom bei der Regelung meistens mittels jeweils eines Drucksensors überwacht wird. Nachteilig daran ist der erhebliche Aufwand an den notwendigen Komponenten, wie Proportionalventilen und Drucksensoren sowie die zugehörigen Leitungen. Zudem muss die elektrische Steuereinheit eine entsprechend große Anzahl von Schnittstellen zur Erfassung von Sensordaten sowie zur Steuerung von Ventilen aufweisen. Die elektronische Steuereinheit muss dementsprechend relativ groß und im Ergebnis kostenaufwendig konzipiert sein.

Außerdem sind in Fahrzeugen, insbesondere in Nutzfahrzeugen wie Off-Highway-Fahrzeugen, zunehmend unterschiedliche Fahrassistenzsysteme vorhanden, welche Bremseingriffe an den zu bremsenden Fahrzeugrädern autonom vornehmen können. Bereits häufig vorhanden sind ein Antiblockiersystem (ABS, engl.: Anti-Lock Braking System) und eine Anfahrregelung (ATC, engl.: Automatic Traction Control) beziehungsweise Antriebsschlupfregelung (ASR). Derartige Systeme helfen, speziell auf rutschigem Untergrund, das Blockieren von Fahrzeugrädern zu verhindern, wenn beim Abbremsen des Fahrzeugs die Betriebsbremse zu stark betätigt wird, oder um ein Durchdrehen von Fahrzeugrädern zu verhindern, wenn beim Anfahren das Fahrpedal zu stark betätigt wird.

Neben einem ABS und einem ATC beziehungsweise ASR werden weitere Fahrerassistenzsysteme gefordert, wie beispielsweise ein elektronisches Stabilitätsprogramm (ESP, engl.: Electronic Stability Program), eine automatische Abstands- und Geschwindigkeitsregelung (ACC, engl.: Adaptive Cruise Control), eine Umkipp-Verhinderung (RSC, engl.: Roll Stability Control) oder ein Notbremssystem (AEBS, engl: Automatic Emergency Braking System), die jeweils Bestandteil eines elektronischen Bremssystems (EBS, engl. Electronic Brake System) sind. Zur Steuerung dieser zusätzlichen Systeme benötigt eine elektrohydraulische Bremsanlage weitere Sensoren und Ventilanordnungen sowie zusätzliche Schnittstellen, welche die Kosten für die elektronische Steuereinheit erhöhen.

Vor diesem Hintergrund lag der Erfindung die Aufgabe zugrunde, eine elektrohydraulische Bremsanlage vorzustellen, welche die genannten Anforderungen erfüllen kann und die kostengünstig in der Herstellung ist. Insbesondere sollen die Anzahl von erforderlichen Ventilen und Sensoren sowie der Aufwand für elektronische Schnittstellen zur Signalerfassung und zur Steuerung der zu steuernden Komponenten möglichst gering sein. Gleichwohl soll die Bremsanlage flexibel an die jeweiligen Anforderungen anpassbar sein. Insbesondere soll eine solche Bremsanlage für den Einsatz im Antriebsstrang eines Off-Highway-Fahrzeugs geeignet sein.

Die Lösung dieser Aufgabe ergibt sich aus den Merkmalen des unabhängigen Anspruchs, während vorteilhafte Ausgestaltungen und Weiterbildungen der Erfindung den zugeordneten Unteransprüchen entnehmbar sind.

Die gestellte Aufgabe wird gelöst durch eine elektrohydraulische Bremsanlage eines Off-Highway-Fahrzeugs, welche folgendes aufweist:
- einen ersten hydraulischen Bremskreis für eine erste Fahrzeugachse,
- einen zweiten hydraulischen Bremskreis für mindestens eine zweite Fahrzeugachse,
- mindestens eine Radbremse für jeweils ein Fahrzeugrad pro Fahrzeugachse, wobei die Radbremse einen mit einem hydraulischen Druckfluid beaufschlagbaren Bremszylinder aufweist,
- eine elektronische Steuereinheit mit einer Bremskraftverteilungsfunktion,
- mindestens einen Bremssignalgeber,
- mindestens ein zentrales Bremskraftverteilventil pro Bremskreis,
- mindestens einen Signaleingang der elektronischen Steuereinheit zur Erfassung eines Bremssignals des Bremssignalgebers, sowie
- mindestens einen Signalausgang der elektronischen Steuereinheit je Bremskraftverteilventil zu dessen Steuerung,
wobei durch die elektronische Steuereinheit in Zusammenwirken mit dem zentralen Bremskraftverteilventil und dem Bremssignalgeber dem jeweiligen Bremskreis ein Bremsdruck zur Beaufschlagung der Bremszylinder der zu bremsenden Radbremsen der betreffenden Fahrzeugachsen mit einem hydraulischen Druckfluid zuführbar ist.

Bei einer elektrohydraulischen Bremsanlage gemäß der Erfindung wird demnach pro Bremskreis lediglich ein hydraulisches Bremskraftverteilventil zur Bremsbetätigung benötigt. Weiter wird im einfachsten Fall lediglich ein Sensor zur Bremsbedarfserfassung für einen Bremssignalgeber benötigt. Eine elektronische Steuereinheit zur Steuerung der Bremsanlage benötigt dementsprechend lediglich einen Eingang zur Bremsbedarfserfassung und einen Ausgang zur Bremsdrucksteuerung der zu bremsenden Fahrzeugräder der Vorderachse sowie lediglich einen weiteren Ausgang zur Bremsdrucksteuerung der zu bremsenden Fahrzeugräder einer oder mehrerer Hinterachsen. Dadurch wird die Anzahl von Ventilen und Sensoren im Vergleich zu anderen technischen Lösungen verringert, welches zu einer erkennbaren Kosteneinsparung führt. Zudem kann eine Verringerung des Bauraumbedarfs und des Gewichts der Bremsanlage erreicht werden.

Außerdem kann eine vorhandene Steuereinheit, wie sie beispielsweise für pneumatische Bremsanlagen in Nutzfahrzeugen oder für Bremsanlagen, welche wie in Personenkraftwagen üblicherweise über Bremsflüssigkeitsleitungen betätigt werden, verwendet werden. Eine derartige elektronische Steuereinheit kann mit einfachen Modifikationen vergleichsweise einfach an eine elektrohydraulische Bremsanlage mit den Merkmalen der Erfindung angepasst werden. Dadurch können Kosten für die Neukonzeption einer Steuereinheit für eine elektrohydraulische Bremsanlage eingespart werden. Von dieser Mindestausstattung einer elektrohydraulischen Bremsanlage ausgehend, sind, je nach Anforderung, vielfältige Erweiterungen mit Fahrassistenzsystemen möglich, wie sie bereits eingangs erwähnt wurden.

Gemäß einer vorteilhaften Ausführungsform einer die Merkmale der Erfindung aufweisenden Bremsanlage kann vorgesehen sein, dass deren Bremskraftverteilventile als Proportionalventile ausgebildet sind.

Demnach können beispielsweise als 3/3-Wege-Magnetschaltventile ausgebildete Proportionalventile genutzt werden, und zwar jeweils mit zwei Schaltstellungen für zwei hydraulische Verbindungen für die hydraulische Beaufschlagung jeweils eines Bremskreises sowie mit einer dazwischen liegenden Sperrstellung. Proportionalventile haben sich in Hydraulikanlagen vielfach bewährt. Eine erste Schaltstellung eines solchen 3/3-Wege-Magnetschaltventils kann eine direkte Verbindung zwischen einem Druckmittelvorrat und einem Bremskraftverteilventil freischalten oder absperren. Eine zweite Schaltstellung kann eine indirekte Verbindung zwischen dem Druckmittelvorrat über einen Bremssignalgeber, welcher eine Bremsanforderung, wie beispielsweise einen Bremspedalweg auswertet, und dem Bremskraftverteilventil freischalten oder absperren.

Gemäß einer Ausführungsform der Erfindung kann vorgesehen sein, dass mindestens einer der Bremskreise einen zentralen Drucksensor für eine Bremsdrucküberwachung und/oder für eine Bremsdrucksteuerung aufweist, und dass die elektronische Steuereinheit einen Signaleingang für jeden angeordneten Drucksensor aufweist. Demzufolge ermöglicht eine solche elektrohydraulische Bremsanlage zwei Steuerungsmodi. In einem ersten Steuerungsmodus kann der Bremsdruck mittels jeweils eines Drucksensors pro Bremskreis überwacht und gesteuert werden. Jeweils ein Drucksensor kann in einer der zugehörigen Bremsleitungen pro Bremskreis integriert sein. Dadurch kann ein geschlossener Regelkreis geschaffen werden. Dieser erste Drucksteuermodus ermöglicht eine gezielte Steuerung des Bremsdruckes innerhalb des geschlossenen Regelkreises der zugehörigen Bremsleitungen. Die Regelung kann über gepulste Druckmodulatoren und/oder über Proportionalventile erfolgen, wobei beispielsweise pro Bremskreis ein Ventil zum Druckaufbau sowie Druckerhalt und ein weiteres Ventil beziehungsweise ein Druckmodulator zum Druckabbau dient. Alternativ dazu ist in einem zweiten Steuerungsmodus eine hydraulische Beaufschlagung der Bremskreise ohne interne Drucksensoren in einem offenen Regelkreis möglich.

Gemäß einer Ausführungsform der Erfindung kann vorgesehen sein, dass im Bereich eines jeden zu bremsenden Fahrzeugrades ein Radgeschwindigkeitssensor vorhanden ist, und dass die elektronische Steuereinheit einen Signaleingang für jeden angeordneten Radgeschwindigkeitssensor aufweist. Die Radgeschwindigkeitssensoren stellen demnach der elektronischen Steuereinheit fortlaufend Messwerte zur Radgeschwindigkeit der angetriebenen Fahrzeugräder zur Verfügung. Diese Daten können in der elektronischen Steuereinheit ausgewertet werden, so dass eine permanente Schlupferfassung erfolgen kann. Die ermittelten Werte zu der Schlupferfassung können von mehreren Fahrassistenzsystemen abgerufen und für eine Bremssteuerung und/oder eine Antriebssteuerung des Fahrzeugs in Bezug zu diesem Schlupf verwendet werden. Diese Systeme benötigen dadurch vorteilhaft nicht jeweils eine eigene Sensorik zur Schlupferkennung.

Gemäß einer anderen Weiterbildung der Erfindung kann vorgesehen sein, dass mindestens einer der Bremskreise einen zentralen Temperatursensor für eine Temperaturüberwachung des hydraulischen Druckfluids in diesem Bremskreis aufweist, und dass die elektronische Steuereinheit einen Signaleingang für jeden angeordneten Temperatursensor aufweist. Die ermittelten Temperaturdaten können in der elektrischen Steuereinheit ausgewertet und über diese in die Regelung verschiedener Fahrassistenzsysteme eingehen, um die Bremssteuerung bei einer drohenden Überhitzung von Radbremsen anzupassen und dieser entgegenzuwirken. Dadurch wird die Betriebssicherheit der elektrohydraulischen Bremsanlage verbessert.

Weiter kann vorgesehen sein, dass die elektrohydraulische Bremsanlage ein Antiblockiersystem aufweist, wobei das Antiblockiersystem für jedes zu bremsende Fahrzeugrad jeweils ein Antiblockierregelventil aufweist, welche mit dem Bremskraftverteilventil des betreffenden Bremskreises zur Erzeugung einer Antiblockierfunktion zusammenwirken, und dass die elektronische Steuereinheit einen Signalausgang für jedes angeordnete Antiblockierregelventil zu dessen Steuerung aufweist. Demnach kann ein Antiblockiersystem mit relativ geringem Aufwand in eine erfindungsgemäße elektrohydraulische Bremsanlage integriert werden. Insbesondere kann ein derartiges Antiblockiersystem für zwei Bremskreise unabhängig von der Anzahl der zu bremsenden Fahrzeugräder und damit unabhängig von der Anzahl der Antiblockierregelventile über die lediglich zwei zentralen Bremskraftverteilventile der zwei Bremskreise mit Druckfluid versorgt werden. Das Ansteuern der Antiblockierregelventile erfolgt mittels der elektronischen Steuereinheit, wofür eine entsprechende Anzahl von Schnittstellen vorgesehen ist.

Gemäß einer sehr vorteilhaften Ausführungsform ist vorgesehen, dass die Antiblockierregelventile des Antiblockiersystems als impulsgesteuerte Ventile ausgebildet sind, und dass die elektronische Steuereinheit für eine Impulssteuerung dieser Ventile ausgebildet ist. Demnach können für das Antiblockiersystem impulsgesteuerte Ventile beziehungsweise impulsgesteuerte Bremsdruckmodulatoren zur Bremsdruckmodulation zum Einsatz kommen, welche nur einen Bremsdruck abbauen, während für den Druckaufbau die vorhandenen Bremskraftverteilventile zum Einsatz gelangen. Eine gegebenenfalls in der elektronischen Steuereinheit bereits implementierte Software, welche auf einer Steuerung impulsgesteuerter Ventile beruht, kann vorteilhaft zur Ansteuerung der impulsgesteuerten Antiblockierregelventile verwendet werden.

Durch die den Aufbau der erfindungsgemäßen elektrohydraulischen Bremsanlage wird einerseits die Gesamtanzahl von Proportionalventilen der Bremsanlage verringert, andererseits kann vorteilhaft ein Antiblockiersystem, welches auf einer pulsmodulierten Steuerung beruht und beispielsweise bereits aus pneumatischen Bremsanlagen bekannt ist, vorteilhaft verwendet werden.

Gemäß einer weiteren Ausführungsform der Erfindung kann vorgesehen sein, dass die elektrohydraulische Bremsanlage ein Anfahrregelsystem aufweist, welches mit dem Antiblockiersystem zur Erzeugung einer Anfahrregelfunktion zusammenwirkt. Ein derartiges Anfahrsystem kann die gemessenen Radgeschwindigkeiten der Fahrzeugräder auswerten und ebenso vorteilhaft wie das Antiblockiersystem mittels der Antiblockierregelventile sowie den lediglich zwei Bremskraftverteilventilen der zwei Bremskreise eine Antriebsschlupfregelung der Fahrzeugräder der Vorderachse beziehungsweise der Fahrzeugräder der einen oder mehreren Hinterachsen des Off-Highway-Fahrzeugs steuern.

Weiter kann vorgesehen sein, dass die elektrohydraulische Bremsanlage einen hydraulischen Redundanzbremskreis mit zwei ansteuerbaren Redundanzventilen aufweist, welche jeweils mit einem der zwei Bremskraftverteilventile hydraulisch verbunden sind, und welche mit der elektronischen Steuereinheit derart elektrisch verbunden sind, dass im Falle einer Fehlfunktion der Bremsanlage eine Notbremsfunktion des Off-Highway-Fahrzeugs aktivierbar ist. Durch den Redundanzbremskreis kann demnach eine vorgeschriebene Notbremsfunktion der Bremsanlage gewährleistet werden. Dafür sind lediglich zwei Redundanzventile erforderlich, welche beispielsweise als 3/2-Wege-Magnetschaltventile ausgebildet sind, die jeweils zwischen dem Bremssignalgeber und einem Bremskraftverteilventil eines Bremskreises hydraulisch zwischengeschaltet sind.

Schließlich betrifft die Erfindung auch ein Off-Highway-Fahrzeug, wie beispielweise ein landwirtschaftlicher Traktor, ein Baufahrzeug, ein Militärfahrzeug, ein Spezialfahrzeug oder ein Lastwagen, als Einzelfahrzeug oder als Zugfahrzeug-Anhängefahrzeug-Kombination, mit einer elektrohydraulischen Bremsanlage, welche gemäß einem der Vorrichtungsansprüche aufgebaut ist.

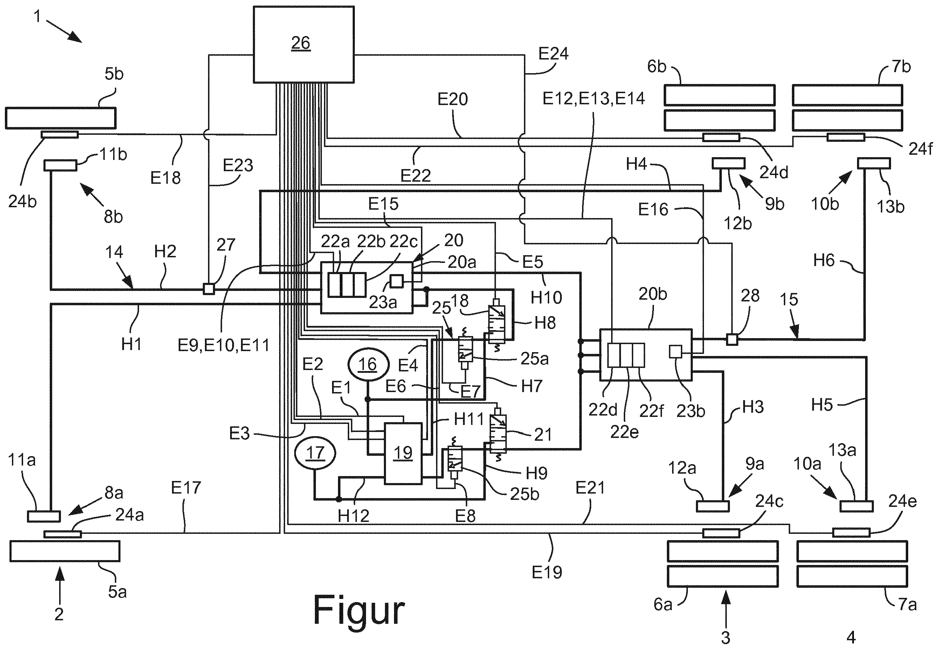

Die Erfindung wird nachstehend anhand von einem in der beigefügten Zeichnung dargestellten Ausführungsbeispiel näher erläutert. In der Zeichnung zeigt die einzige Figur einen elektrohydraulischen Plan einer Bremsanlage 1 eines Off-Highway-Fahrzeugs. Zur besseren Unterscheidung ist allen hydraulischen Verbindungsleitungen ein Präfix "H" und allen elektrischen Verbindungsleitungen ein Präfix "E" vorangestellt.

Demnach umfasst das Off-Highway-Fahrzeug in dem gezeigten Ausführungsbeispiel eine als Vorderachse ausgebildete erste Fahrzeugachse 2 sowie zwei als Hinterachsen ausgebildete zweite und dritte Fahrzeugachsen 3, 4. Zum Abbremsen der vorderen Fahrzeugräder 5a, 5b sowie der hinteren Fahrzeugräder 6a, 6b und 7a, 7b ist jedem Fahrzeugrad 5a, 5b, 6a, 6b, 7a, 7b eine Radbremse 8a, 8b, 9a, 9b, 10a, 10b zugeordnet. Die Radbremsen 8a, 8b, 9a, 9b, 10a, 10b sind hydraulisch betätigbar und weisen jeweils einen Bremszylinder 11a, 11b, 12a, 12b, 13a, 13b auf. Die Radbremsen 8a, 8b, 9a, 9b, 10a, 10b üben entsprechend dem jeweils im Bremszylinder 11a, 11b, 12a, 12b, 13a, 13b anliegenden hydraulischen Druck eine Bremskraft auf das drehende Fahrzeugrad 5a, 5b, 6a, 6b, 7a, 7b aus. Die Bremszylinder 12a, 12b beziehungsweise 13a, 13b der vorderen Fahrzeugräder 6a, 6b beziehungsweise 7a, 7b einer hinteren Fahrzeugachse 3, 4 können zudem mit Federspeichern für eine Feststellbremsfunktion versehen sein.

In dem gezeigten Ausführungsbeispiel sind die Radbremsen 8a, 8b der vorderen Fahrzeugachse 2 einem gemeinsamen ersten hydraulischen Bremskreis 14 zugeordnet, während die Radbremsen 9a, 9b, 10a, 10b der hinteren Fahrzeugachsen 3, 4 mittels eines zweiten hydraulischen Bremskreises 15 betätigbar sind. Ein erster Druckmittelvorrat 16 ist dabei dem ersten Bremskreis 14 zugeordnet und über eine erste hydraulische Bremsleitung H1 an den ersten Bremszylinder 11a sowie über eine zweite hydraulische Bremsleitung H2 an den zweiten Bremszylinder 11b der vorderen ersten Fahrzeugachse 2 angeschlossen. Dem zweiten Bremskreis 15 ist ein zweiter Druckmittelvorrat 17 zugeordnet, welcher über eine dritte hydraulische Bremsleitung H3 an den dritten Bremszylinder 12a und über eine vierte hydraulische Bremsleitung H4 an den vierten Bremszylinder 12b der hinteren zweiten Fahrzeugachse 3 sowie über eine fünfte hydraulische Bremsleitung H5 an den fünften Bremszylinder 13a und über eine sechste hydraulische Bremsleitung H6 an den sechsten Bremszylinder 13b der hinteren dritten Fahrzeugachse 4 angeschlossen.

Im ersten Bremskreis 14 ist ein als 3/3-Wege-Proportional-Magnetschaltventil ausgebildetes erstes Bremskraftverteilventil 18 angeordnet. Dieses erste Bremskraftverteilventil 18 ist über eine siebte hydraulische Verbindungsleitung H7 mit einem Bremssignalgeber 19 sowie über eine achte hydraulische Verbindungsleitung H8 mit einem Eingang eines dem ersten Bremskreis 14 und dem zweiten Bremskreis 15 zugeordneten ersten ABS-Moduls 20a eines Antiblockiersystems 20 verbunden.

Im zweiten Bremskreis 15 ist ein als 3/3-Wege-Proportional-Magnetschaltventil ausgebildetes zweites Bremskraftverteilventil 21 angeordnet. Das zweite Bremskraftverteilventil 21 ist über eine neunte hydraulische Verbindungsleitung H9 mit dem Bremssignalgeber 19 sowie über eine zehnte hydraulische Verbindungsleitung H10 mit einem Eingang des dem ersten Bremskreis 14 und dem zweiten Bremskreis 15 zugeordneten ersten ABS-Moduls 20a sowie mit einem Eingang eines dem zweiten Bremskreis 15 zugeordneten zweiten ABS-Moduls 20b des Antiblockiersystems 20 verbunden.

Der Bremssignalgeber 19 ist an ein Bremsanforderungsmittel, insbesondere an ein nicht dargestelltes Bremspedal in der Fahrerkabine des Fahrzeugs gekoppelt, wobei über Sensormittel ein Pedalweg, eine Pedalstellung oder dergleichen an den Signalgeber 19 übermittelt werden, welcher diese Daten beständig oder zum Abruf zur Verfügung stellt. Der Fahrer des Fahrzeugs kann durch Betätigen des Bremspedals hydraulischen Bremsdruck zur Beaufschlagung der Bremszylinder 11a, 11b, 12a, 12b, 13a, 13b anfordern.

Jedes der beiden ABS-Module 20a, 20b weist drei als impulsgesteuerte Ventile ausgebildete Antiblockierregelventile 22a, 22b, 22c, 22d, 22e, 22f auf, wobei jedem Bremszylinder 11a, 11b, 12a, 12b, 13a, 13b der Radbremsen 8a, 8b, 9a, 9b, 10a, 10b jeweils ein Antiblockierregelventil 22a, 22b ,22c, 22d, 22e, 22f zur Bremsdruckregelung einer Antiblockierfunktion zugeordnet ist. Zudem weisen die beiden ABS-Module 20a, 20b jeweils einen Temperatursensor 23a, 23b zur Temperaturüberwachung des Hydraulikfluids der beiden Bremskreise 14, 15 auf. Den Fahrzeugrädern 5a, 5b, 6a, 6b, 7a, 7b ist jeweils ein Radgeschwindigkeitssensor 24a, 24b, 24c, 24d, 24e, 24f zur Schlupferkennung und Schlupfregelung mittels des Antiblockiersystems zugeordnet.

Des Weiteren weist die elektrohydraulische Bremsanlage 1 einen Redundanzbremskreis 25 auf, um das Fahrzeug bei einem störungsbedingtem Ausfall der Bremsanlage 1 oder Teilen davon sicher einbremsen zu können. Der Redundanzbremskreis 25 weist zwei jeweils als 3/2-Wege-Magnetschaltventile ausgebildete Redundanzventile 25a, 25b auf. Dabei ist ein erstes Redundanzventil 25a dem ersten Bremskreis 14 vorgeschaltet und über eine elfte hydraulische Verbindungsleitung H11 eingangsseitig mit dem Bremssignalgeber 19 sowie ausgangsseitig mit dem ersten Bremskraftverteilventil 18 verbunden. Ein zweites Redundanzventil 25b ist dem zweiten Bremskreis 15 vorgeschaltet und über eine zwölfte hydraulische Verbindungsleitung H12 eingangsseitig mit dem Bremssignalgeber 19 und ausgangsseitig mit dem zweiten Bremskraftverteilventil 21 verbunden.

Die elektrohydraulische Bremsanlage 1 wird mittels einer zentralen elektronischen Steuereinheit 26 geregelt. Der Fahrer des Kraftfahrzeugs kann durch Betätigen des Bremspedals einen Bremswunsch signalisieren, das anschließende Bremsverhalten des Fahrzeugs wird allerdings durch die Steuereinheit 26 beeinflusst.

Die elektronische Steuereinheit 26 weist mehrere elektrische Schnittstellen auf. Im Einzelnen betreffen diese Anschlüsse für
- vier elektrische Verbindungsleitungen E1, E2, E3, E4 zu dem Bremssignalgeber 19 für zwei Bremsanforderungssensoren sowie für zwei Bremsanforderungsschalter, welche dem Bremssignalgeber 19 zugeordnet, hier jedoch nicht weiter dargestellt sind,
- zwei elektrische Verbindungsleitungen E5, E6 zu jeweils einem Bremskraftverteilventil 18, 21,
- zwei elektrische Verbindungsleitungen E7, E8 zu jeweils einem Redundanzventil 25a, 25b,
- sechs elektrische Verbindungsleitungen E9, E10, E11, E12, E13, E14 zu jeweils einem Antiblockierregelventil 22a, 22b, 22c, 22d, 22e, 22f,
- zwei elektrische Verbindungsleitungen E15, E16 zu jeweils einem Temperatursensor 23a, 23b, sowie weitere
- sechs elektrische Verbindungsleitungen E17, E18, E19, E20, E21, E22 zu jeweils einem Radgeschwindigkeitssensor 24a, 24b, 24c, 24d, 24e, 24f.

Außerdem können sind zwei weitere Schnittstellen beziehungsweise elektrische Anschlüsse für Verbindungsleitungen E23, E24 an der Steuereinheit 26 ausgebildet, welche mit jeweils einem Drucksensor 27, 28 pro Bremskreis 14, 15 verbunden sind, um einen Drucksteuermodus mit einem geschlossenen Regelkreis zu realisieren.

Die elektronische Steuereinheit 26 ist dazu ausgebildet und konfiguriert in der Art eines "Brake-by-Wire-Systems" auf einen Bremsvorgang selbsttätig einzuwirken.

Hierzu ermittelt die Steuereinheit 26 auf der Grundlage der ihr zugeführten Informationen Steuersignale für die Bremskraftverteilventile 18, 21, um diese in einer ersten Schaltstellung abhängig von dem Bremssignalgeber 19 und in einer zweiten Schaltstellung unabhängig von dem Bremssignalgeber 19 zu öffnen und die Bremskreise 14, 15 jeweils individuell mit Druck zu beaufschlagen. Dadurch wird die Bremskraft auf die vordere Fahrzeugachse 2 und auf die hinteren Fahrzeugachsen 3, 4 verteilt. Bei einer Bremsregelung mittels der Antiblockierfunktion werden die Antiblockierregelventile 22a, 22b, 22c, 22d, 22e, 22f mit gepulsten Steuersignalen beaufschlagt. Mit diesen Steuersignalen wird das Bremsverhalten der einzelnen Radbremsen 8a, 8b, 9a, 9b, 10a, 10b eingestellt. Bei einem Ausfall oder einer Störung der elektrohydraulischen Bremsanlage 1 trennen die Redundanzventile 25a, 25b zumindest die Radbremsen 9a, 9b, 10a, 10b der hinteren Fahrzeugachsen 3, 4 von der Druckmittelversorgung ab, wodurch mittels der erwähnten Federspeicher die Feststellbremse aktiviert wird.

### Bezugszeichenliste (Teil der Beschreibung)

- 1: Elektrohydraulische Bremsanlage
- 2: Erste Fahrzeugachse, Vorderachse
- 3: Zweite Fahrzeugachse, Hinterachse
- 4: Dritte Fahrzeugachse, Hinterachse
- 5a: Erstes Fahrzeugrad
- 5b: Zweites Fahrzeugrad
- 6a: Drittes Fahrzeugrad
- 6b: Viertes Fahrzeugrad
- 7a: Fünftes Fahrzeugrad
- 7b: Sechstes Fahrzeugrad
- 8a: Erste Radbremse
- 8b: Zweite Radbremse
- 9a: Dritte Radbremse
- 9b: Vierte Radbremse
- 10a: Fünfte Radbremse
- 10b: Sechste Radbremse
- 11a: Erster Bremszylinder
- 11b: Zweiter Bremszylinder
- 12a: Dritter Bremszylinder
- 12b: Vierter Bremszylinder
- 13a: Fünfter Bremszylinder
- 13b: Sechster Bremszylinder
- 14: Erster hydraulischer Bremskreis
- 15: Zweiter hydraulischer Bremskreis
- 16: Erster Druckmittelvorrat
- 17: Zweiter Druckmittelvorrat
- 18: Erstes Bremskraftverteilventil
- 19: Bremssignalgeber
- 20: Antiblockiersystem, ABS
- 20a: Erstes ABS-Modul
- 20b: Zweites ABS-Modul
- 21: Zweites Bremskraftverteilventil
- 22a: Erstes Antiblockierregelventil
- 22b: Zweites Antiblockierregelventil
- 22c: Drittes Antiblockierregelventil
- 22d: Viertes Antiblockierregelventil
- 22e: Fünftes Antiblockierregelventil
- 22f: Sechstes Antiblockierregelventil
- 23a: Erster Temperatursensor
- 23b: Zweiter Temperatursensor
- 24a: Erster Radgeschwindigkeitssensor
- 24b: Zweiter Radgeschwindigkeitssensor
- 24c: Dritter Radgeschwindigkeitssensor
- 24d: Vierter Radgeschwindigkeitssensor
- 24e: Fünfter Radgeschwindigkeitssensor
- 24f: Sechster Radgeschwindigkeitssensor
- 25: Redundanzbremskreis
- 25a: Erstes Redundanzventil
- 25b: Zweites Redundanzventil
- 26: Elektronische Steuereinheit
- 27: Drucksensor am ersten hydraulischen Bremskreis
- 28: Drucksensor am zweiten hydraulischen Bremskreis
- E1 - E24: Erste bis Vierundzwanzigste elektrische Verbindungsleitungen
- H1 - H12: Erste bis zwölfte hydraulische Verbindungsleitungen, Bremsleitungen

## Patentansprüche

1. Elektrohydraulische Bremsanlage (1) eines Off-Highway-Fahrzeugs, welche aufweist:
- einen ersten hydraulischen Bremskreis (14) für eine erste Fahrzeugachse (2),
- einen zweiten hydraulischen Bremskreis (15) für mindestens eine zweite Fahrzeugachse (3, 4),
- mindestens eine Radbremse (8a, 8b, 9a, 9b, 10a, 10b) für jeweils ein Fahrzeugrad (5a, 5b, 6a, 6b, 7a, 7b) pro Fahrzeugachse (2, 3, 4), wobei die Radbremse einen mit einem hydraulischen Druckfluid beaufschlagbaren Bremszylinder (11a, 11b, 12a, 12b, 13a, 13b) aufweist,
- eine elektronische Steuereinheit (26) mit einer Bremskraftverteilungsfunktion,
- mindestens einen Bremssignalgeber (19),
- mindestens ein zentrales Bremskraftverteilventil (18, 21) pro Bremskreis (14, 15),
- mindestens einen Signaleingang der elektronischen Steuereinheit (26) zur Erfassung eines Bremssignals des Bremssignalgebers (19), sowie
- mindestens einen Signalausgang der elektronischen Steuereinheit (26) je Bremskraftverteilventil (18, 21) zu dessen Steuerung,
wobei durch die elektronische Steuereinheit (26) in Zusammenwirken mit dem zentralen Bremskraftverteilventil (18, 21) und dem Bremssignalgeber (19) dem jeweiligen Bremskreis (14, 15) ein Bremsdruck zur Beaufschlagung der Bremszylinder (11a, 11b, 12a, 12b, 13a, 13b) der zu bremsenden Radbremsen (8a, 8b, 9a, 9b, 10a, 10b) der betreffenden Fahrzeugachsen (2, 3, 4) mit einem hydraulischen Druckfluid zuführbar ist.

2. Bremsanlage nach Anspruch 1, **dadurch gekennzeichnet,**
**dass** die Bremskraftverteilventile (18, 21) als Proportionalventile ausgebildet sind.

3. Bremsanlage nach Anspruch 1 oder 2, **dadurch gekennzeichnet,**
**dass** mindestens einer der Bremskreise (14, 15) einen zentralen Drucksensor (27, 28) für eine Bremsdrucküberwachung und/oder für eine Bremsdrucksteuerung aufweist,
und **dass** die elektronische Steuereinheit (26) einen Signaleingang für jeden angeordneten Drucksensor (27, 28) aufweist.

4. Bremsanlage nach einem der Ansprüche 1 bis 3, **dadurch gekennzeichnet,**
**dass** im Bereich eines jeden zu bremsenden Fahrzeugrades (5a, 5b, 6a, 6b, 7a, 7b) ein Radgeschwindigkeitssensor (24a, 24b, 24c, 24d, 24e, 24f) vorhanden ist,
und **dass** die elektronische Steuereinheit (26) einen Signaleingang für jeden angeordneten Radgeschwindigkeitssensor (24a, 24b, 24c, 24d, 24e, 24f) aufweist.

5. Bremsanlage nach einem der Ansprüche 1 bis 4, **dadurch gekennzeichnet,**
**dass** mindestens einer der Bremskreise (14, 15) einen zentralen Temperatursensor (23a, 23b) für eine Temperaturüberwachung des hydraulischen Druckfluids in diesem Bremskreis (14, 15) aufweist,
und **dass** die elektronische Steuereinheit (26) einen Signaleingang für jeden angeordneten Temperatursensor (23a, 23b) aufweist.

6. Bremsanlage nach einem der Ansprüche 1 bis 5, **dadurch gekennzeichnet,**
**dass** die elektrohydraulische Bremsanlage (1) ein Antiblockiersystem (20) aufweist, wobei das Antiblockiersystem (20) für jedes zu bremsende Fahrzeugrad (5a, 5b, 6a, 6b, 7a, 7b) jeweils ein Antiblockierregelventil (22a, 22b, 22c, 22d, 22e, 22f) aufweist, welche mit dem Bremskraftverteilventil (18, 21) des betreffenden Bremskreises (14, 15) zur Erzeugung einer Antiblockierfunktion zusammenwirken,
und **dass** die elektronische Steuereinheit (26) einen Signalausgang für jedes angeordnete Antiblockierregelventil (22a, 22b, 22c, 22d, 22e, 22f) zu dessen Steuerung aufweist.

7. Bremsanlage nach Anspruch 6, **dadurch gekennzeichnet,**
**dass** die Antiblockierregelventile (22a, 22b, 22c, 22d, 22e, 22f) des Antiblockiersystems (20) als impulsgesteuerte Ventile ausgebildet sind,
und **dass** die elektronische Steuereinheit (26) für eine Impulssteuerung dieser Ventile ausgebildet ist.

8. Bremsanlage nach einem der Ansprüche 1 bis 7, **dadurch gekennzeichnet,**
**dass** die elektrohydraulische Bremsanlage (1) ein Anfahrregelsystem aufweist, welches mit dem Antiblockiersystem (20) zur Erzeugung einer Anfahrregelfunktion zusammenwirkt.

9. Bremsanlage nach einem der Ansprüche 1 bis 8, **dadurch gekennzeichnet,**
**dass** die elektrohydraulische Bremsanlage (1) einen hydraulischen Redundanzbremskreis (25) mit zwei ansteuerbaren Redundanzventilen (25a, 25b) aufweist, welche jeweils mit einem der zwei Bremskraftverteilventile (18, 21) hydraulisch verbunden sind, und welche mit der elektronischen Steuereinheit (26) elektrisch verbunden sind, derart, dass im Falle einer Fehlfunktion der Bremsanlage eine Notbremsfunktion des Off-Highway-Fahrzeugs aktivierbar ist.

10. Off-Highway-Fahrzeug, wie ein landwirtschaftlicher Traktor, ein Baufahrzeug, ein Militärfahrzeug, ein Spezialfahrzeug oder ein Lastwagen, als Einzelfahrzeug oder als Zugfahrzeug-Anhängefahrzeug-Kombination, mit einer elektrohydraulischen Bremsanlage (1), welche die Merkmale von wenigstens einem der Vorrichtungsansprüche aufweist.
